Europäisches Patentamt

European Patent Office

Office européen des brevets

(19)

(11) Veröffentlichungsnummer: **0 028 785**

**B1**

(12) **EUROPÄISCHE PATENTSCHRIFT**

(45) Veröffentlichungstag der Patentschrift: **02.05.84**

(51) Int. Cl.³: **A 22 C 13/02**

(21) Anmeldenummer: **80106740.6**

(22) Anmeldetag: **03.11.80**

(54) **Vorrichtung zum axialen Raffen von synthetischem Schlauchmaterial zur Weiterverarbeitung insbesondere auf Wurstfüllautomaten.**

(30) Priorität: **05.11.79 DE 2944623**

(43) Veröffentlichungstag der Anmeldung:
**20.05.81 Patentblatt 81/20**

(45) Bekanntmachung des Hinweises auf die Patenterteilung:
**02.05.84 Patentblatt 84/18**

(84) Benannte Vertragsstaaten:
**AT BE CH FR GB IT LI NL SE**

(56) Entgegenhaltungen:
**DE - A - 2 912 474
DE - B - 1 301 962
FR - A - 2 153 378
FR - A - 2 218 997
FR - A - 2 259 016
FR - A - 2 367 600
GB - A - 922 908
US - A - 2 819 488
US - A - 3 209 398**

(73) Patentinhaber: **Kollross, Günter
Am Wallerstädter Weg 20
D-6080 Gross Gerau-Dornheim (DE)**

(72) Erfinder: **Kollross, Günter
Am Wallerstädter Weg 20
D-6080 Gross Gerau-Dornheim (DE)**

(74) Vertreter: **Beyer, Werner, Dipl.-Ing. et al,
Staufenstrasse 36, II P.O. Box 174109
D-6000 Frankfurt/Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Vorrichtung zum axialen Raffen von synthetischem Schlauchmaterial zur Weiterverarbeitung insbesondere auf Wurstfüllautomaten.

Vorrichtung zum axialen Raffen von zur Weiterverarbeitung insbesondere auf Würstfüllautomaten bestimmten synthetischen Schlauchmaterial unter Bildung einer durchgehenden schraubenförmigen Hauptfalte, bestehend aus einem in das zu raffende Schlauchmaterial ragenden langgestreckten Raffdorn mit einem Anschlag für das Schlauchmaterial am einspannseitigen Ende und mindestens drei um den Raffdorn regelmäßig verteilt angeordneten und um quer zur Dornachse gerichtete Achsen drehend angetriebenen Raffrollen, die übereinstimmend am Umfang mit dem Dornquerschnitt entsprechend teilkreisförmig ausgekehlten Zähnen versehen sind, welche von Raffrolle zu Raffrolle um einen durch die Rollenanzahl bestimmten Bruchteil der Zahnteilung in Umfangsrichtung zueinander versetzt angeordnet sind.

Eine bekannte solche Vorrichtung (DE—A—24 03 470) ist mit zwei um parallele Achsen drehbar angetriebenen Raffrollen versehen, deren halbkreisförmige ausgekehlte Zähne abwechselnd jeweils die Hälfte des Dornumfangs mit dem darauf aufgezogenen und durch den hohlen Dorn aufgeblasenen Schlauchmaterial umfassen und dabei gemeinsam mit Hilfe eines getrennt regelbaren Antriebs um den Raffdorn gedreht werden. Die Drehung der Rollenachsen um den Raffdorn führt zu einer fortlaufenden Verteilung der an den Umfangsenden der Auskehlungen entstehenden Knitterzonen über den Umfang des gerafften Schlauchmaterials, wodurch das Raffverhältnis als Verhältnis der ungerafften Schlauchlänge zur Länge der durch das Raffen gebildeten Schlauchraupe bei gleichzeitiger besserer Versteifung der Raupe beträchtlich gesteigert werden kann. Der hohe Verdichtungsgrad des Schlauchmaterials in den sogenannten Knitterzonen zwischen den sich jeweils um etwa den halben Dornumfang erstreckenden Falten führt jedoch gerade durch den fortlaufenden Versatz in Umfangsrichtung zu einer beträchtlichen Beanspruchung im Bereich dieser Falten und ergibt nicht nur äußerlich ein unbefriedigendes Raffbild, sondern birgt auch die Gefahr einer Verletzung des Schlauchmaterials.

Man hat deshalb auch bereits versucht, eine einzige durchgehende Hauptfalte in Schraubenform zu bilden. Eine bekannte Vorrichtung (DE—C—16 32 137) verwendet zu diesem Zweck drei um feste Achsen innerhalb einer Querebene zum Raffdorn antreibbare Raffrollen mit ausgekehlten Zähnen am Umfang, die schräg zu den Rollenachsen verlaufen und je ein Drittel des Raffdornumfangs erfassen. Durch Versatz der Raffrollen in Umfangsrichtung um je ein Drittel der Zahnteilung liegen die Zahnflanken somit im Eingriffsbereich auf einer praktisch unterbrochenen Schraubenlinie, die das Schlauchmaterial unter Bildung der gewünschten durchgehenden Schraubenfalte auf dem Dorn vorschiebt und gegen einen darauf angeordneten Anschlag bzw. die darauf bereits gebildete Raupe andrückt. Bei dieser bekannten Vorrichtung besteht jedoch die Gefahr, daß das Schlauchmaterial beim Einzug in die Raffzone zwischen die Zähne zweier benachbarter Raffrollen gelangt und beschädigt wird.

Eine andere bekannte Vorrichtung zur Erzielung einer durchgehenden Schraubenfalte (DE—B—21 47 498) sieht deshalb ganz allgemein vor, die zum Raffen dienende Axialkraft in ständiger Einwirkung auf das zu raffende Schlauchmaterial stets an der selben Stelle rotierend um die Dornachse aufzubringen, was entweder durch eine um die Dornachse drehend angetriebene Hülse mit einem schraubenförmig gewundenen Vorsprung im Inneren nach Art einer Innenschnecke oder einem Satz auf einer Schraubenlinie um den Dorn angeordneter ungezahnter Rädchen mit schneidenförmigen Außenumfang, die gemeinsam um die Dornachse kreisen, verwirklicht werden soll. Die Gefahr des Einklemmens für das Schlauchmaterial ist zwar hier nicht gegeben; das raupenseitige Ende des schraubenförmigen Vorsprungs bzw. das diesem entsprechende Rädchen, das die neugebildete Falte in ständiger rotierender Einwirkung gegen das Ende der bereits gebildeten Raupe andrückt, führt jedoch zu einer äußerst scharfen Knickung des Schlauchmaterials im Außenbereich der Falte, die an dieser Stelle leicht zur Verletzung des Schlauchmaterials führen kann. Da ferner zur Bildung eines Schraubengangs der Falte eine volle Drehung der Hülse bzw. der Raffrädchen um die Dornachse erforderlich ist, ergeben sich bei einer wirtschaftlichen Fertigung der Raupen sehr hohe Drehzahlen der Hülse bzw. der Rädchen um die Dornachse, die vor allem bei größeren Kalibern zu beträchtlichen Umfangsgeschwindigkeiten an der Angriffsstelle der zum Raffen dienenden Axialkraft führen und sich nur durch Zufuhr entsprechender Mengen eines flüssigen Gleitmittels beherrschen lassen.

Der Erfindung liegt deshalb die Aufgabe zugrunde, eine Vorrichtung zum axialen Raffen von synthetischem Schlauchmaterial unter Bildung einer schraubenförmig verlaufenden Hauptfalte zu schaffen, die ohne die Gefahr von Beschädigung des Schlauchmaterials und auch ohne übermäßige Mengen an flüssigem Gleitmittel ein hohes Raffverhältnis bei gleichzeitig hoher Steifigkeit der gebildeten Raupe ergibt.

Ausgehend von einer Vorrichtung der eingangs genannten Art wird diese Aufgabe dadurch gelöst,

a) daß die Zähne in an sich bekannter Weise parallel zur Achse der Raffrolle ausgerichtet sind,

b) daß die Zähne eine solche Breite aufweisen, daß sich ihre Auskehlungen am Dornumfang überlappen und,

c) daß die Raffrollen gemeinsam um die Längsachse des Raffdorns drehbar gelagert und in solcher Drehrichtung angetrieben sind, daß die Zähne einer beliebigen Raffrolle den Zähnen der in anderer Richtung des Kreisens nacheilenden Raffrolle in Vorschubrichtung des Schlauchmaterials unmittelbar folgen.

Umfangreiche Versuche an unterschiedlichen Schlauchkalibern haben ergeben, daß mit der erfindungsgemäßen Vorrichtung eine äußerst kompakte Schlauchraupe mit einer durchgehenden schraubenförmigen Hauptfalte herstellen läßt. Da die um ihre Achse rotierenden Raffrollen das Schlauchmaterial ständig verschieben, wird für das Kreisen der Raffrollen um den Dorn nur ein Bruchteil der Drehzahl benötigt wie bei der bekannten Vorrichtung mit der ständig auf das zu raffende Schlauchmaterial einwirkenden umlaufenden Axialkraft. Die Beanspruchung des Schlauchmaterials bei der Faltenbildung ist demzufolge vergleichsweise gering, und die gesamte Vorrichtung arbeitet bei hoher Leistung äußerst ruhig, In völlig überraschender Weise führt gerade der entgegengesetzte Versatz der Zähne der einzelnen Raffrollen in Umfangsrichtung gegenüber einem Versatz, bei dem der in Umfangsrichtung nachfoldenden Zahn auch axial nachfolgt, zu der gewünschten einwandfreien Faltenbildung ohne die Gefahr von Lufteinschlüssen in den Falten. Das Ergebnis ist eine äußerst kompakte Raupe mit hoher Steifigkeit, die höchsten Ansprüchen des Weiterverarbeiters genügt.

In vorteilhafter Ausgestaltung der Erfindung liegt die Drehzahl der Raffrollen in der gleichen Größenordnung, mit welcher die Raffrollen um die Dornachse kreisen. Ein Drehzahlverhältnis von 1:1 hat sich als äußerst günstig erwiesen. Abweichungen im Bereich zwischen 1:2 und 2:1 führen jedoch auch zu voll befreidigenden Ergebnissen. Auf jeden Fall ist eine Einstellbarkeit zwischen den Drehzahlen der Raffrollen und des Rollensatzes um den Dorn nicht erforderlich, so daß ein besonderes Merkmal der Erfindung darin besteht, daß das Verhältnis der Drehzahl der Raffrollen zur Drehzahl des Rollensatzes um den Raffdorn konstant ist. Dieses Merkmal gestattet in weiterer vorteilhafter Ausgestaltung der Erfindung, den Antrieb der Raffrollen von der kreisenden Bewegung des Rollensatzes um die Dornachse abzuleiten, was wiederum dadurch besonders vorteilhaft verwirklicht werden kann, daß die Raffrollen antriebsmäßig mit einem Schneckenrad verbunden sind, das zusammen mit dem Rollensatz um den Raffdorn kreist und dabei auf einem stillstehenden ringförmigen Schneckenrad abwälzt.

Die Mindestanzahl der Raffrollen beträgt, wie sich aus der obigen Charakterisierung der Erfindung ergibt, drei. Besonders zweckmäßig hat sich jedoch die Verwendung von vier Rollen erwiesen.

Die Anzahl der Zähne je Raffrolle richtet sich nach der Anzahl der Raffrollen selbst und der Dicke der Zähne der Gestalt, daß die Zähne der Raffrollen im Überlappungsbereich einander praktisch berühren.

Als besonders vorteilhaft hat es sich ferner erwiesen, die beim Kreisen um die Dornachse vorauseilenden Enden der Auskehlungen nach auswärts auszurunden. Durch diese Maßnahme wird das Schlauchmaterial beim Raffen besonders schonend behandelt.

Noch ein weiters Merkmal zur fortlaufenden Ausgestaltung der Erfindung sieht vor, daß die Zähne der Raffrollen aus einem elastischen Material bestehen. Dadurch wird ein schonendes und dennoch festes Anpressen der neugebildeten Falten gegen die bereits gebildete Raupe gewährleistet. Als besonders zweckmäßiges Material der Zähne hat sich künstlicher Gummi erwiesen.

Ein bevorzugtes Ausführungsbeispiel einer Raffvorrichtung gemäß der Erfindung mit vier Raffrollen wird nachstehend in Verbindung mit der Zeichnung näher erläutert. Es zeigen:

Fig. 1 In perspektivischer Darstellung eine Ansicht auf die Auslaßseite der Vorrichtung, auf der die Raupe gebildet wird,

Fig. 2 eine Seitenansicht der Vorrichtung, teilweise im Axialschnitt,

Fig. 3 in größerem Maßstab eine Stirnansicht des Eingriffbereichs der im Übrigen weggebrochenen Raffrollen im Richtung der Pfeile III—III in Figur 1 zur Veranschaulichung des Zahnversatzes im Verhältnis zur Drehrichtung des Rollensatzes.

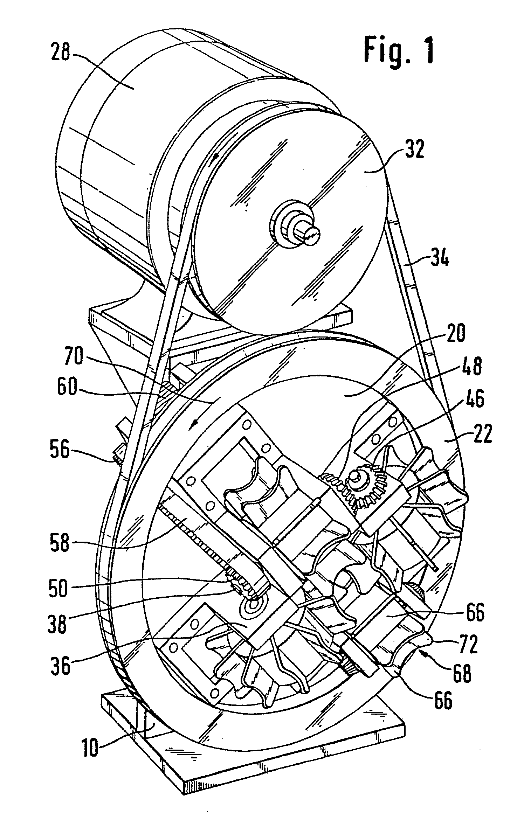

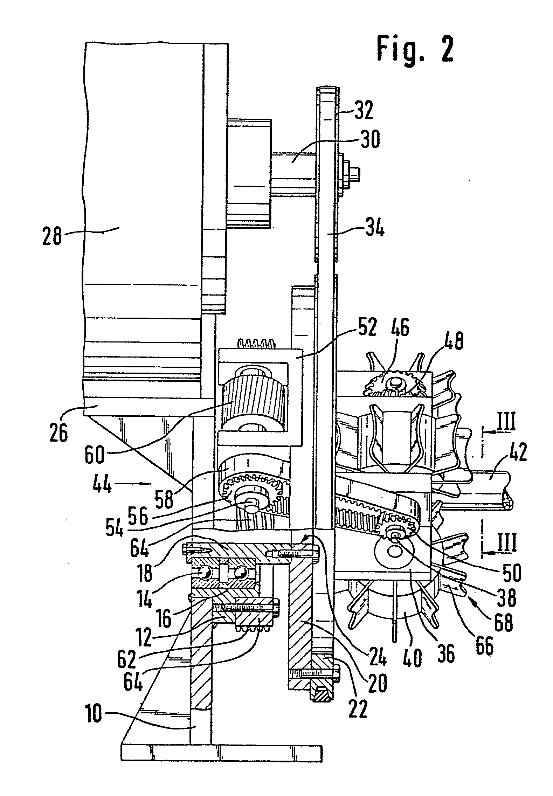

Wie in den Figuren 1 und 2 dargestellt, ist an einem Lagerbock 10 eine Lagerhülse 12 beispielsweise durch Schweißen befestigt, in welcher mittels Kugellagern 14, 16 eine hülsenförmige Welle 18 drehbar gelagert ist. An dem einen Stirnende der Welle 18 ist eine kreisringförmige Tragplatte 20 angeschraubt, an welcher auf der der Welle 18 abgewandten Seite eine ringförmige Riemenscheibe 22 festgeschraubt ist. Die Tragplatte 20 ist ferner mit einer zentralen Durchbrechung 24 versehen.

Am oberen Ende des Lagerbocks 10 ist eine Konsole 26 angeschweißt, die einen vorzugsweise regelbaren Elektromotor 28 trägt. An der Abtriebswelle 30 des Elektromotors 28 ist eine weitere Riemenscheibe 32 befestigt, die über einen Keilriemen 34 mit der Riemenscheibe 22 der Tragplatte 20 antriebsmäßig verbunden ist.

Die Tragplatte 20 trägt auf der von der Welle 18 abgewandten Seite ringsum die zentrale Durchbrechung 24 verteilt vier U-förmige Lagerböcke 36, in denen die Wellen 38 je einer Raffrolle 40 gelagert sind. Die Raffrollen befinden sich zwischen den Schenkeln der Lagerböcke und bilden dadurch, in Stirnansicht der Vorrichtung betrachtet, einen regelmäßigen Stern, in dessen Centrum sich ein in Figur 1 nicht gezeigter hohler Raffdorn 42 befindet, der sich von einer nicht gezeigten Einspannstelle fliegend durch die Raffvorrichtung und koaxial zur Welle 18 erstreckt und das in Richtung des Pfeils 44 (Fig. 2) zugeführte Schlauchmaterial beim Raffen führt und als Raupe aufnimmt, die sich gegen einen gleichfalls nicht gezeigten Anschlag am Dorn 42 abstützt.

Die Wellen 38 mit den Raffrollen 40 sind durch drei Paare von Kegelrädern 46, 48 in gleichem Drehsinn miteinander verbunden. Eine der Wellen 38, die nur ein Kegelrad trägt, ist an ihrem anderen Ende mit einer Zahnriemenrolle 50 versehen. Auf der der hülsenförmigen Welle 18 zugewandten Seite der Tragplatte 20 ist nahe der Peripherie ein weiterer Lagerbock 52 befestigt, in welchem eine Welle 54 gelagert ist, die an ihrem vorstehendem Ende eine Zahnriemenrolle 56 trägt, die über einen Zahnriemen 58 mit der Zahnriemenrolle 50 und damit sämtlichen Raffrollen 40 antriebsmäßig verbunden ist. Auf der Welle 54 ist zwischen den Schenkeln des Lagerbocks ein Schneckenrad 60 befestigt, dessen Zähne in Eingriff mit den schneckenförmig ausgebildeten Gewindegängen 62 eines Ringteils 64 stehen, das an der Lagerhülse 12 festgeschraubt ist. Es leuchtet ein, daß, wenn der Elektromotor 28 eingeschaltet wird und die Tragplatte 20 mit den Raffrollen um den Raffdorn 42 dreht, das Schneckenrad 60 von den Schneckengängen 62 des Ringteils 64 eine Drehbewegung erhält und dadurch die Raffrollen 40 um deren Achsen 38 dreht. Die Steilheit der Schneckengänge 62 und des Schneckenrades 60 ist vorzugsweise so gewählt, daß die Raffrollen 40 bei einer Umdrehung der Tragplatte 20 um ihre Achse gleichfalls eine Umdrehung ausführen.

Wie den Figuren 1 und 2 zu entnehmen ist, ist jede Raffrolle 40 an ihrem Umfang mit im Beispielsfall zehn Zähnen 66 versehen, deren Breite größer als der Durchmesser des Raffdorns 42 ist. Die Zähne bestehen aus einem elastischen Material wie vorzugsweise künstlichem Gummi und weisen eine solche Dicke auf, daß der Abstand zwischen zwei aufeinanderfolgenden Zähnen einer Raffrolle im Fußbereich der Zähne etwa der dreifachen Zahndicke entspricht.

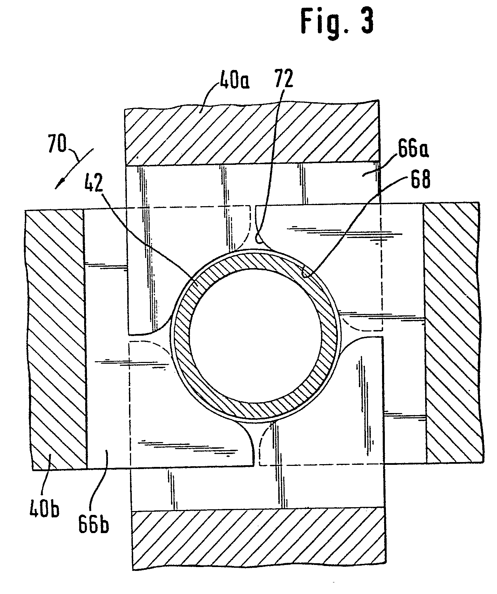

Wie insbesondere auch Figur 3 zeigt, sind die Zähne 66 im Kopfbereich mit etwa halbkreisförmigen Auskehlungen 68 versehen, die sich im Eingriffsbereich am Raffdorn 42 zu einem vollen Kreis ergänzen und den Raffdorn 42 mit geringem Axialabstand umschliessen. Wie die Draufsicht auf die Zähne 66 in Figur 3 von der Raupenseite her zeigt, sind die Zähne der benachbarten Raffrollen in Umfangsrichtung um die Rollenachsen- oder wellen 38 derart gegeneinander versetzt, daß bei Drehung der Tragplatte 20 um den Raffdorn 42 in Richtung des Pfeils 70 der Zahn einer beliebigen Raffrolle 40 wie beispielsweise der Zahn 66 a der Raffrolle 40 a dem Zahn 66 b der in Richtung des Pfeils 70 voreilenden Raffrolle 40b in Förderrichtung des Schlauchmaterials, d.h. zum Betrachter der Figur 3 hin, voraus-eilt. Diese Anordnung ist für die einwandfreie Bildung einer schraubenförmig gewundenen Raupenfalte wesentlich.

Aus Figur 3 sowie auch den übrigen Figuren geht ferner hervor, daß die Auskehlung 68 jedes Zahns 66 an dem in Richtung des Pfeils 70 vorauseilenden Ende nach auswärts ausgerundet ist, wie dies in Figur 3 bei 72 angedeutet ist. Durch diese Ausrundung 72 wird sichergestellt, daß der gleichzeitig um die Dornachse kreisende Zahn, wenn er sich auf der Schlauchseite dem Schlauchmaterial nähert, dieses unter keinen Umständen verletzt und weich mit dem Schlauchmaterial in Eingriff gelangt.

Die dargestellte und beschriebene Vorrichtung ist beispielsweise für einen Schlauchdurchmesser (Kaliber) von 40 mm bestimmt, wozu der Raffdorn 42 einen Durchmesser von 33 mm aufweist. Wie Versuche ergeben haben, lassen sich mit der gezeigten und beschriebenen Vorrichtung bei einer Drehzahl des Elektromotors 28 von 1500 U/m, die einer Drehzahl der Tragplatte 20 von etwa 700 U/m entsprechen, ca. 5 Meter Schlauchmaterial je Sekunde zu einer äußerst kompakten Raupe raffen, die eine durchgehende schraubenförmige Hauptfalte aufweist, ohne daß sich Anzeichen einer Beschädigung des Schlauchmaterials erkennen lassen.

## Patentansprüche

1. Vorrichtung zum axialen Raffen von zur Weiterverarbeitung insbesondere auf Wurstfüllautomaten bestimmtem synthetischem Schlauchmaterial unter Bildung einer durchgehenden schraubenförmigen Hauptfalte, bestehend aus einem in das zu raffende Schlauchmaterial ragenden langgestreckten Raffdorn (42) mit einem Anschlag für das Schlauchmaterial am einspannseitigen Ende und mindestens drei um den Raffdorn (42) regelmäßig verteilt angeordneten und um quer zur Dornachse gerichtete Achsen drehend angetriebenen Raffrollen (40), die übereinstimmend am Umfang mit dem Dornquerschnitt entsprechend teilkreisförmig ausgekehlten Zähnen (66) versehen sind, welche von Raffrolle zu Raffrolle um einen durch die Rollenanzahl bestimmten Bruchteil der Zahnteilung in Umfangsrichtung zueinander versetzt angeordnet sind, dadurch gekennzeichnet,

a) daß die Zähne (66) in an sich bekannter Weise parallel zur Achse der Raffrolle (40) ausgerichtetsind,

b) daß die Zähne (66) eine solche Breite aufweisen, daß sich ihre Auskehlungen (68) am Dornumfang überlappen und,

c) daß die Raffrollen (40) gemeinsam um die Längsachse des Raffdorns (42) drehbar gelagert und in solcher Drehrichtung angetrieben sind, daß die Zähne (66b) einer beliebigen Raffrolle (40b) den Zähnen (66a) der in Richtung des Kreisens (Pfeil 70) nacheilenden Raffrolle (40a) in Vorschubrichtung des Schlauchmaterials unmittelbar folgen.

2. Vorrichtung nach Anspruch 1 dadurch gekennzeichnet, daß die Drehzahl der Raffrollen (40) in der gleichen Größenordnung liegt, mit welcher die Raffrollen (40) um die Dornachse kreisen.

3. Vorrichtung nach Anspruch 2 dadurch gekennzeichnet, daß das Drehzahlverhältnis 1:1 beträgt.

4. Vorrichtung nach Anspruch 2 dadurch gekennzeichnet, daß das Drehzahlverhältnis innerhalb der Grenzen 1:2 und 2:1 liegt.

5. Vorrichtung nach einem der vorhergehenden Ansprüche dadurch gekennzeichnet, daß das Verhältnis der Drehzahl der Raffrollen (40) zur Drehzahl des Rollensatzes um den Raffdorn (42) konstant ist.

6. Vorrichtung nach Anspruch 5 dadurch gekennzeichnet, daß der Antrieb der Raffrollen (40) von der kreisenden Bewegung des Rollensatzes um die Dornachse abgeleitet ist.

7. Vorrichtung nach Anspruch 6 dadurch gekennzeichnet, daß die Raffrollen (40) antriebsmäßig mit einem Schneckenrad (60) verbunden sind, das zusammen mit dem Rollensatz um den Raffdorn (42) kreist und dabei auf einer stillstehenden ringförmigen Schnecke (64) abwälzt.

8. Vorrichtung nach einem der vorhergehenden Ansprüche dadurch gekennzeichnet, daß die Anzahl der Raffrollen (40) vier beträgt.

9. Vorrichtung nach einem der vorhergehenden Ansprüche dadurch gekennzeichnet, daß die beim Kreisen um die Dornachse vorauseilenden Enden (72) der Auskehlungen (68) nach auswärts ausgerundet sind.

10. Vorrichtung nach einem der vorhergehenden Ansprüche dadurch gekennzeichnet, daß die Zähne (66) der Raffrollen (40) aus einem elastischen Material bestehen.

11. Vorrichtung nach Anspruch 10 dadurch gekennzeichnet, daß das Material der Zähne (66) künstlicher Gummi ist.

**Revendications**

1. Appareil pour plisser axialement un tube synthétique pour son utilisation ultérieure, notamment sur des machines à bourrer les saucisses, par la formation d'un pli principal, continu et hélicoïdal, cet appareil comprenant un mandrin de plissage (42) qui s'engage à l'intérieur de la matière tubulaire à plisser et présente, à son extrémité où se forme le soufflet à spires hélicoïdales, une butée pour la matière tubulaire, et au moins trois galets de plissage (40) montés sur des axes orientés transversalement par rapport à l'axe du mandrin et répartis régulièrement autour de cet axe, ces galets étant pourvus d'une manière concordante, sur leur périphérie, de palettes (66) qui présentent sur leur bord extérieur des concavités en arc de cercle dont la courbure correspond à celle de la section du mandrin, ces palettes étant disposées de façon à présenter, d'un galet au suivant et par rapport l'une à l'autre, un décalage qui représente une fraction, déterminée en fonction du nombre de galets, du pas des palettes, ce dispositif étant caractérisé par le fait que:

a) les palettes (66) sont orientées selon le mode connu en soi parallèlement à l'axe du galet de plissage (40) correspondant;

b) les palettes (66) ont une largeur telle que leurs concavités (68) se recouvrent entre elles sur la périphérie du mandrin, et

c) les galets (40) sont tous montés en rotation autour de l'axe longitudinal du mandrin (42) et entraînés en rotation dans un sens tel que les palettes (66b) d'un galet de plissage quelconque (40b) suivent immédiatement les dents (66a) du galet suivant (40a) dans le sens de la rotation (flèche 70) dans la direction d'avance de la matière tubulaire.

2. Appareil suivant la Revendication 1, caractérisé par le fait que le nombre de tours-minute des galets de plissage (40) se situe dans le même ordre de grandeur que celui de l'ensemble des galets de plissage (40) autour de l'axe du mandrin (42).

3. Appareil selon la Revendication 2, caractérisé par le fait que le rapport entre les nombres de tours-minute est de 1:1.

4. Appareil selon la Revendication 2, caractérisé par le fait que le rapport entre les nombres de tours-minute se situe dans la fourchette comprise entre 1:2 et 2:1.

5. Appareil selon l'une quelconque des Revendications 1 à 4, caractérisé par le fait que le rapport entre le nombre de tr/mn des galets de plissage (40) et le nombre de tr/mn de l'ensemble des galets autour de l'axe du mandrin (42) est constant.

6. Appareil selon la Revendication 5, caractérisé par le fait que l'entraînement des galets de plissage (40) est dérivé du mouvement circulaire effectué par l'ensemble des galets autour de l'axe du mandrin.

7. Appareil selon la Revendication 6, caractérisé par le fait que les galets de plissage (40) sont reliés par une transmission (58) à un pignon à denture hélicoïdale (60) qui tourne solidairement avec le jeu de galets (40) autour du mandrin (42) et roule à cet effet sur une couronne fixe (64) formant une vis sans fin.

8. Appareil selon l'une quelconque des Revendications 1 à 7, caractérisé par le fait que les galets de plissage (40) sont au nombre de quatre.

9. Appareil selon l'une quelconque des Revendications 1 à 8, caractérisé par le fait que les extrémités (72) des concavités (68) des palettes qui se trouvent en tête pendant la rotation des galets autour de l'axe du mandrin, sont arrondies vers l'extérieur.

10. Appareil selon l'une quelconque des Revendications 1 à 9, caractérisé par le fait que les palettes (66) des galets de plissage (40) sont réalisés en matériau élastique.

11. Appareil selon la Revendication 10, caractérisé par le fait que la matière constitutive des palettes (66) est un caoutchouc synthétique.

**Claims**

1. Apparatus for axially shirring, with formation of a throughgoing helical main fold, of synthetic tubular material for further processing, especially on sausage stuffing machines, comprising an elongated shirring mandrel (42) projecting into the flexible tubular material to be shirred, with an abutment for the flexible tubular material at the fixing end and with at least three shirring rollers (40) which are situated in uniformly distributed manner about the shirring mandrel (42) and which are driven in rotational movement about axes directed transversely with respect to the mandrel axis and are provided identically at their circumference with teeth (66) which are arcuately recessed at the periphery in accordance with the mandrel cross-section, and which teeth are arranged offset circumferentially relatively to one another from shirring roller to shirring roller by a tooth pitch fraction determined by the number of rollers, characterised in that,

a) the teeth (66) are directed in a manner known per se parallel to the axis of the shirring roller (40),
b) the teeth (66) are of such a width that their recesses (68) overlap at the mandrel circumference, and
c) the shirring rollers (40) are mounted to be rotatable jointly about the longitudinal axis of the shirring mandrel (42) and are driven in such a direction of rotation that the teeth (66b) of any one shirring roller (40b) immediately follow, in the direction of feed of the flexible tubular material, the teeth (66a) of the shirring roller (40a) which trails in the direction of circulation (arrow 70).

2. Apparatus according to claim 1, characterised in that the rotational speed of the shirring rollers (40) is of the same order of magnitude as the speed at which the shirring rollers (40) circulate about the mandrel axis.

3. Apparatus according to claim 2, characterised in that the rotational speed ratio amounts to 1:1.

4. Apparatus according to claim 2, characterised in that the rotational speed ratio is within the limits 1:2 and 2:1.

5. Apparatus according to one of the preceding claims, characterised in that the ratio of the rotational speed of the shirring rollers (40) to the rotational speed of the roller set about the mandrel (42) is constant.

6. Apparatus according to claim 5, characterised in that the drive for the shirring rollers (40) is derived from the circulating movement of the set of rollers about the mandrel axis.

7. Apparatus according to claim 6, characterised in that the shirring rollers (40) are connected for drive purposes to a worm wheel (60) which circulates together with the set of rollers about the shirring mandrel (42) and in so doing rolls on a stationary annular worm (64).

8. Apparatus according to one of the preceding claims, characterised in that the number of shirring rollers (40) is four.

9. Apparatus according to one of the preceding claims, characterised in that the ends (72) of the recesses (68) which lead in the circulating motion about the mandrel axis are rounded in the outward direction.

10. Apparatus according to one of the preceding claims, characterised in that the teeth (66) of the shirring rollers (40) are made of an elastic material.

11. Apparatus according to claim 10, characterised in that the material of the teeth (66) is synthetic rubber.

Fig. 1

Fig. 2

# Fig. 3